**Europäisches Patentamt**

**European Patent Office**

**Office européen des brevets**

(19)

(11) Veröffentlichungsnummer : **0 380 040 B1**

(12)

# EUROPÄISCHE PATENTSCHRIFT

(45) Veröffentlichungstag der Patentschrift :
**25.11.92 Patentblatt 92/48**

(51) Int. Cl.$^5$ : **A01C 17/00**

(21) Anmeldenummer : **90101257.5**

(22) Anmeldetag : **23.01.90**

(54) **Schleuderstreuer.**

(30) Priorität : **24.01.89 DE 3902000
22.07.89 DE 3924328**

(43) Veröffentlichungstag der Anmeldung :
**01.08.90 Patentblatt 90/31**

(45) Bekanntmachung des Hinweises auf die
Patenterteilung :
**25.11.92 Patentblatt 92/48**

(84) Benannte Vertragsstaaten :
**DE FR GB**

(56) Entgegenhaltungen :
**EP-A- 0 117 005
FR-A- 2 211 839
GB-A- 1 130 539
US-A- 2 766 872**

(73) Patentinhaber : **Rauch Landmaschinenfabrik
GmbH
Postfach 1107 Landstrasse 14
W-7573 Sinzheim (DE)**

(72) Erfinder : **Rauch, Norbert
Bergseestrasse 49
W-7573 Sinzheim (DE)**

(74) Vertreter : **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41 (DE)**

**Beschreibung**

Die Erfindung betrifft einen Schleuderstreuer für rieselfähiges Streugut, insbesondere Dünger, mit den Merkmalen des Obergriffs des Anspruchs 1.

Schleuderstreuer mit den Merkmalen des Oberbegriffs des Anspruchs 1 sind bekannt (EP-A-292 873). Wie bei Streugeräten aller Art ist man auch bei Schleuderstreuern darauf bedacht, eine über die Streubreite möglichst gleichmäßige Verteilung des Streugutes, das heißt eine über die Streubreite gleichbleibende Streudichte zu erzielen. Dieses Ziel wird am ehesten bei relativ kleinen Streumengen und/oder kleinen Streubreiten erreicht. Das Streubild zeigt dann einen flach-dreiecksförmigen Verlauf, dessen Maximum (Spitze) in der Mitte hinter dem Streuer liegt und das nach beiden Seiten flach abfällt. Die eigentliche Arbeitsbreite des Streuers ist diejenige Breite, bei der 50 % der gewünschten Streumenge ausgebracht worden sind. Durch entsprechendes Anschlußfahren kann dann eine Überlappung der Streubilder derart erzielt werden, daß sich die Streumengen jeder Fahrt so addieren, daß über die gesamte bestreute Fläche eine annähernd gleichmäßige Streugutdichte erhalten wird. Je größer die Streumenge ist, die im übrigen auch mit der Streubreite zunimmt, um so steiler fällt das Streubild zur Seite hin ab und um so schwieriger ist es, im Wege des Anschlußfahrens eine solche Überlappung der Streubilder zu erreichen, die zu einer gleichmäßigen Streudichte führt. Auch kommt es zu einer Vergrößerung der effektiven Arbeitsbreite. Ferner werden im mittleren Bereich Überdüngungen festgestellt, was in erster Linie auf die sogenannten Prallverluste zurückzuführen ist. Hierbei handelt es sich um diejenigen Streugutpartikel, die nicht kontrolliert von den Wurfflügeln erfaßt werden, sondern beim Eintreten des Wurfflügels in den Düngerstrahl durch Prallvorgänge in beliebige Richtungen beschleunigt bzw. abgelenkt werden.

Bei noch größeren Streumengen/Streubreiten zeigt das Streubild neben einer starken Überhöhung im mittleren Bereich hinter dem Schleuderstreuer, die vornehmlich auf die vorgenannten Prallverluste zurückzuführen ist, auf jeder Seite nochmals eine Überhöhung. Insgesamt ergibt sich also ein wellenförmiger Verlauf des Streubildes mit nach außen hin relativ steil abfallenden Flanken. Da bei größerer Arbeitsbreite auch die zulaufende Streugutmenge größer ist, spricht man hier vom sogenannten "Mengeneffekt" zur Abgrenzung gegenüber dem vorgenannten "Pralleffekt". Die durch den "Mengeneffekt" entstehende Unregelmäßigkeit im Streubild läßt sich beim Anschlußfahren nicht beseitigen.

Um die negativen Auswirkungen, insbesondere des "Mengeneffektes", zu reduzieren, werden beispielsweise statt zwei Wurfflügeln vier Wurfflügel auf der Schleuderscheibe symmetrisch angeordnet. Die - im übrigen geringe - Verbesserung hinsichtlich des "Mengeneffektes" führt dabei in der Regel zu einer Verschlechterung in den Auswirkungen des "Pralleffektes". Auch hat man versucht, dem Problem durch verstellbare Wurfflügel zu begegnen, um dem Streugut je nach Streubreite unterschiedliche Abgangswinkel zu verschaffen. Schließlich ist es bekannt (FR-A-2 211 839), den Wurfflügeln eine komplizierte Raumform zu geben, die dazu beitragen soll, die Streugutpartikel so wenig wie möglich zu reflektieren. Bei allen bekannten Maßnahmen kommt es allenfalls zu einer geringfügigen Verbesserung, nicht aber zu einer auch nur annähernden Beseitigung der nachteiligen Folgen des "Mengeneffektes" und des "Pralleffektes".

Der Erfindung liegt die Aufgabe zugrunde, bei einem Schleuderstreuer gemäß dem Oberbegriff des Anspruchs 1 insbesondere die Prallverluste zu verringern und damit ein gleichmäßigeres Streubild zu erzielen.

Diese Aufgabe wird erfindungsgemäß dadurch gelöst, daß der Auslaufschacht zumindest entlang seiner der Eintrittsseite des Wurfflügels in den Düngerstrahl gegenüberliegenden Begrenzung mit flexiblen, in Drehrichtung des Wurfflügels ausweichenden Materialstreifen versehen ist, die in die Bewegungsbahn des Wurfflügels hineinragen, wobei die Ausbildung vorzugsweise so getroffen ist, daß die flexiblen Materialstreifen an denjenigen Begrenzungen des Ablaufschachtes angeordnet sind, an denen sie bei Durchlauf des Wurfflügels durch den Düngerstrahl nicht in den Düngerstrahl ausweichen. Die flexiblen Materialstreifen sind zweckmäßigerweise als Borsten- bzw. Borstenbündel aus Kunststoff ausgebildet.

Während bei den bekannten Schleuderstreuern mit zwei oder vier Wurfflügeln die durch unkontrollierte Reflexionen beim Eintauchen des Wurfflügels in den Streugutstrahl abprallenden Partikel sich vornehmlich im mittleren Bereich hinter dem Schleuderstreuer sammeln und dort zu einer überproportional großen Streudichte führen, wird bei der erfindungsgemäßen Ausführung beim Eintauchen des Wurfflügels in den Streugutstrahl dieser auf der gegenüberliegenden Seite mittels der flexiblen Materialstreifen geführt und zusammengehalten. Es wird insbesondere vermieden, daß der Streugutstrahl bei diesem Eintauchen, wie bei bekannten Schleuderstreuern üblich, zerplatzt, d. h. ein großer Teil der Partikel in allen Richtung reflektiert wird und - ohne in den Wurfflügel zu gelangen - unkontrolliert verspritzt. Die hierfür verantwortlichen Impulskräfte zwischen Wurfflügel und Partikeln und den Partikeln untereinander werden von den flexiblen Materialstreifen aufgenommen und gedämpft bzw. sogar beseitigt. Dadurch ist sichergestellt, daß der Wurfflügel während seines Vorbeilaufs am Auslauf den Düngerstrahl über seinen gesamten Querschnitt aufnimmt und die Partikel nach außen beschleunigt werden. Kunststoff-Borsten sind deshalb besonders geeignet, weil sie einerseits eine ausreichende Flexibilität haben, um dem Wurfflügel auszuweichen, andererseits ein hohes Rückstellvermögen besitzen, um sich nach dem Vorbeilauf des Wurfflügels wieder in der senkrechten Ausgangslage auszurichten. Auch sind die heute zur Verfügung stehenden Kunststoff-Borsten ausreichend verschleißfest. Durch die erfindungsgemäße Ausbildung ist ferner gewährleistet, daß auch bei Schleuderscheiben mit vier Wurfflügeln, die in der Regel für größere Streubreiten vorgesehen sind, die Prallverluste nicht, wie sonst üblich, ansteigen.

Eine andere bevorzugte Ausführungsform zeichnet sich dadurch aus, daß der obere Schenkel des U-Profils jedes Wurfflügels zumindest mit seiner vorlaufenden Kante und in dem am Auslaufschacht vorbeilaufenden Abschnitt in einer Ebene parallel zur Unterkante des Auslaufschachtes mit geringem Abstand unter dieser angeordnet ist, wobei vorzugsweise weiterhin vorgesehen ist, daß der obere Schenkel jedes Wurfflügels von seiner vorlaufenden Kante entgegen der Drehrichtung unter Bildung eines Freiwinkels nach unten geneigt ist.

Unabhängig von der Neigungslage der Wurfflügel gegenüber der Horizontalen, insbesondere auch bei einer für große Streubreiten vorgesehenen tellerartigen Ausbildung der Schleuderscheibe, bei der die Wurfflügel nach außen ansteigen, ist sichergestellt, daß der obere Schenkel immer unmittelbar unterhalb der Unterkante des Ablaufschachtes vorbeistreicht. Dadurch wird die Anzahl derjenigen Partikel, die in den Spalt zwischen dem oberen Schenkel und der Unterkante des Auslaufschachtes geraten und nicht ausreichend beschleunigt werden, minimiert. Durch den weiterhin vorgesehenen Freiwinkel, unter dem der obere Schenkel angestellt ist, ergibt sich, daß der Wurfflügel nur mit der vorlaufenden Kante auf den Düngerstrahl auftrifft, während die hinter der vorlaufenden Kante austretenden Düngerpartikel auf die geneigte Freifläche fallen und vorwiegend nach hinten und in Richtung auf die Schleuderscheibe reflektiert werden, so daß sie vom nächsten Wurfflügel erfaßt werden können. Ferner wird durch den Freiwinkel der Rückstau des Düngerstrahls im Auslaufschacht, der zu einer unkontrollierten Änderung des Mengendurchsatzes führt, reduziert bzw. vermieden.

Eine andere vorteilhafte Ausführungsform zeichnet sich dadurch aus, daß die vorlaufende Kante des oberen Schenkels jedes Wurfflügels an dessen innerem Ende am Steg ansetzt und in einer Krümmung nach vorne in einen geradlinigen, zum Steg gegebenenfalls parallelen Abschnitt übergeht, wobei ferner von Vorteil ist, wenn jeder Wurfflügel mit seinem inneren Ende über das Zentrum der Schleuderscheibe hinaus auf deren andere Seite reicht.

Mit dieser Ausführungsform ist sichergestellt, daß die vorlaufende Kante des Wurfflügels beim Eintreten in den Düngerstrahl stets so auf die Düngerpartikel auftrifft, daß diese nach außen beschleunigt werden. Dabei kann die genaue Ausbildung der Krümmung und die Verlängerung des Wurfflügels an seinem inneren Ende an die jeweilige Lage und Form der Auslauföffnung bzw. des Auslaufschachtes angepaßt werden.

Eine weitere vorteilhafte Ausführung ergibt sich dann, wenn der obere Schenkel des Wurfflügels zumindest in seinem den Streugutstrahl durchquerenden Bereich eine Breite aufweist, die mindestens annähernd der in Richtung des Durchlaufs des Wurfflügels durch den Streugutstrahl gemessenen Ausdehnung desselben entspricht.

Praktische Versuche mit erfindungsgemäß ausgebildeten Wurfflügeln haben ergeben, daß die Pralleffekte weiter vermindert werden. Die Ursache ist vermutlich in folgendem zu sehen: Beim Durchlauf des Wurfflügels durch den Streugutstrahl "schneidet" der obere Schenkel eine Scheibe von dem Streugutstrahl ab, die je nach Streugutdurchsatz eine unterschiedliche Partikeldichte aufweist. Der Streugutdurchsatz ist um so größer, je größer die Streumenge bei gegebener Arbeitsbreite oder je größer die Arbeitsbreite bei gegebener Streumenge ist. Mit der erfindungsgemäßen Ausbildung ist sichergestellt, daß auch bei größter Partikeldichte im Streugutstrahl die austretende Menge von dem den Streugutstrahl durchquerenden Bereich des Wurfflügels eingefangen und aufgenommen werden kann, der Wurfflügel also nicht, wie bei bekannten Ausführungen, "überläuft". Es ist sichergestellt, daß die in Umlaufrichtung des Flügels am weitesten vorne austretenden Partikel noch in den Wurfflügel gelangen, wenn die in Durchtrittsrichtung zuerst in den Flügel eintretenden Partikel vom Steg desselben erfaßt werden. Die Möglichkeit, daß einzelne Partikel durch Aufprallen, Rückprallen oder dergleichen unkontrolliert reflektiert werden, wird damit weiterhin gesenkt.

Es würde sich nun anbieten, den oberen Schenkel des Wurfflügels über dessen gesamte Länge gleichförmig auszubilden. Die Erfindung jedoch schlägt gemäß einem bevorzugten Ausführungsbeispiel vor, daß die Breite des oberen Schenkels des Wurfflügels von dessen den Streugutstrahl durchquerenden Bereich nach außen abnimmt.

Die gegenüber herkömmlichen Wurfflügeln relativ große Breite des oberen Schenkels bei der erfindungsgemäßen Ausbildung würde bei gleichbleibender Breite über die gesamte Länge des Wurfflügels zu erheblichen Massen führen, die mit der Schleuderscheibe bzw. deren Antrieb zu beschleunigen sind. Auch ergeben sich zwangsläufig bei größeren Massen zunehmende Probleme durch Unwuchten. Mit der erfindungsgemäßen Ausbildung werden diese Probleme vermieden, indem der obere Schenkel des Flügels nach außen schmaler wird. Dabei macht sich die Erfindung die Beobachtung zunutze, daß die

durch den Wurfflügel vom Streugutstrahl abgeschnittene Streugutscheibe sich beim Aufprall auf den Steg des Wurfflügels verformt, d.h. in die Breite verläuft, so daß auch bei abnehmender Breite gewährleistet ist, daß die sich ausbreitende Partikelscheibe immer innerhalb des Wurfflügels geführt ist.

Die Breite des oberen Schenkels des Wurfflügels kann entweder in einer stetigen Kurve oder aber mit wenigstens einem stufenförmigen Sprung nach außen abnehmen. Ein Sprung in der Breite des oberen Schenkels ist deshalb möglich, weil sich die aus dem Streugutstrahl abgeschnittene "Scheibe" aufgrund der vom Steg des Wurfflügels auf die Scheibe ausgeübten und in eine Zentrifugalbeschleunigung umgesetzten Kräfte sehr schnell ausbreitet.

In bevorzugter Ausführung ist vorgesehen, daß der die größte Breite aufweisende Abschnitt des oberen Schenkels sich nur wenig über die in Richtung des Wurfflügels gemessene größte Ausdehnung des Streugutstrahls erstreckt. Damit beschränkt sich die große Breite des oberen Schenkels auf den unmittelbaren Bereich des Streugustrahls.

Zur Anpassung eines Schleuderstreuers an unterschiedliche Arbeitsbreiten und/oder Düngersorten ist es unter anderem bekannt, entweder austauschbare Schleuderscheiben mit unterschiedlichen Wurfflügeln oder aber einheitliche Schleuderscheiben mit in ihrer Geometrie veränderbaren Wurfflügeln vorzusehen (EP-A-0 292 873). Dabei ist es insbesondere bekannt, für größere Arbeitsbreiten längere Flügel als für kleinere Arbeitsbreiten einzusetzen, insbesondere solche Flügel, welche die Schleuderscheibe nach außen überragen. Bei einer solchen Ausbildung schlägt die Erfindung vor, daß der obere Schenkel des Wurfflügels zumindest in seinem über die Peripherie der Scheuderscheibe hinausragenden Bereich eine geringere Breite als in seinem innerhalb der Peripherie liegenden Bereich aufweist. Hiermit trägt die Erfindung der Tatsache Rechnung, daß die aus dem Streugutstrahl abgeschnittene "Scheibe" bis zum Erreichen der Peripherie der Schleuderscheibe so weit flachgedrückt ist, daß der Wurfflügel in dem die Peripherie überragenden Bereich sehr schmal ausgebildet sein kann.

Um das mit der erfindungsgemäßen Ausbildung einhergehende Problem der zu beschleunigenden Massen und der Unwuchtbildung noch besser zu beherrschen, ist gemäß einem weiteren Ausführungsbeispiel vorgesehen, daß der untere Schenkel des Wurfflügels in seinem der Schleuderscheibe aufliegenden Bereich eine geringere Breite als der obere Schenkel aufweist, wobei weiterhin von Vorteil ist, wenn der untere Schenkel des Wurfflügels in seinem über die Peripherie der Schleuderscheibe hinausragenden Bereich etwa die gleiche Breite wie der obere Schenkel aufweist.

Die Breite des unteren Schenkels braucht in dem die Peripherie der Schleuderscheibe überragenden Bereich nur eine solche Breite aufweisen, daß das vom Wurfflügel bis dorthin zu einer Schicht ausgebreitete Streugut auch nach unten hinreichend geführt ist.

Eine weitere vorteilhafte Ausgestaltung zeichnet sich dadurch aus, daß der untere Schenkel des Wurfflügels als schmale Leiste ausgebildet ist, die lediglich im Bereich der den Wurfflügel an der Schleuderscheibe festlegenden Befestigungsmittel auf ein Maß verbreitert ist, das die notwendige Auflage für die Befestigungsmittel schafft.

Durch diese Ausbildung werden vor allem die Massenprobleme auf ein Minimum reduziert, indem der Wurfflügel auf das notwendige Maß "abgemagert" wird. Zugleich ergibt sich dadurch ein Minium an Materialeinsatz, was insbesondere deshalb bedeutsam ist, weil die Wurfflügel aufgrund der Verschleiß- und Korrosionsprobleme in der Regel aus Edelstahl bestehen.

In zweckmäßiger Ausgestaltung ist vorgesehen, daß der Wurfflügel in seinem den Streugutstrahl durchquerenden Bereich eine Breite von ca 60 mm und in seinem äußeren Bereich eine Breite von ca 10 mm aufweist.

Mit dieser Ausbildung ist einerseits den in der Praxis üblichen Auslaufquerschnitten am Vorratsbehälter, andererseits den strömungsdynamischen Verhältnissen hinsichtlich der Ausbreitung der Partikel im Wurfflügel Rechnung getragen.

In weiterhin bevorzugter Ausführung ist vorgesehen, daß der obere Schenkel jedes Wurfflügels in dessen äußerem Abschnitt, der - vom Zentrum der Schleuderscheibe gesehen - jenseits des Auslaufschachtes liegt, höher angeordnet ist als die Unterkante des Auslaufschachtes.

Während der obere Schenkel im Bereich des Auslaufschachtes unmittelbar unterhalb dessen Unterkante vorbeiläuft, liegt der Schenkel im äußeren Abschnitt des Wurfflügels oberhalb der Unterkante des Auslaufschachtes mit der Folge, daß die - vom Zentrum der Schleuderscheibe aus gesehen - vornehmlich nach außen abprallenden Partikel von dem höher liegenden Schenkel eingefangen und in den Wurfflügel abgelenkt werden, um von diesem in kontrollierter Weise nach außen beschleunigt zu werden.

Dem gleichen Zweck dient die Maßnahme, daß der Steg des U-Profils jedes Wurfflügels in dessen äußerem Abschnitt mit seiner am Übergang zu dem höher liegenden Schenkel befindlichen Innenkante auf einem Radius der Schleuderscheibe liegt, der wenig größer ist als derjenige, der radial am weitesten außen liegenden Begrenzung des Auslaufschachtes.

Die Innenkante des Stegs am Übergang zu dem höher liegenden Schenkelabschnitt läuft also außenseitig unmittelbar am Auslaufschacht vorbei, so daß auch an dieser Stelle die Möglichkeit der Reflexion von Partikeln nach hinten beseitigt ist.

Bei der vorgenannten Ausführungsform ist es zweckmäßig, wenn der höher liegende Schenkel im äußeren Abschnitt des Wurfflügels parallel zum Boden des Vorratsbehälters angeordnet ist. Der Schenkel im äußeren Abschnitt des Wurfflügels liegt also so hoch, daß auch noch solche Partikel erfaßt werden, die unter einem flachen Winkel nach außen unkontrolliert reflektiert werden.

Eine weitere Ausführungsform der Erfindung zeichnet sich dadurch aus, daß der Steg und der obere Schenkel jedes Wurfflügels an ihrem inneren Ende an einer im Zentrum der Schleuderscheibe angeordneten zylindrischen Kappe anliegen, wobei ferner von Vorteil ist, wenn der obere Schenkel am inneren Ende über die gesamte Länge seiner Kante an der Kappe anliegt.

Mit der vorgenannten Ausführungsform wird der Wurfflügel an seinem inneren Ende gleichsam abgeschlossen. Dadurch wird weitgehend vermieden, daß beim Eintreten des Wurfflügels in den Streugutstrahl Partikel nach innen reflektiert werden bzw. eventuell doch reflektierte Partikel eingefangen und dem Zentrifugalfeld des Wurfflügels ausgesetzt werden.

Vorzugsweise ist die Ausbildung so getroffen, daß die vorlaufende Kante des oberen Schenkels an einer der Anlagestelle des Stegs an der Kappe in der Verlängerung des Stegs etwa gegenüberliegenden Seite der Kappe ansetzt, in einer ersten Krümmung mit zunehmendem radialem Abstand von der Achse der Schleuderscheibe nach vorne gezogen ist und mit einer daran anschließenden entgegengesetzten Krümmung in eine zum Steg etwa parallele Gerade übergeht, wobei vorteilhafterweise die erste Krümmung der vorlaufenden Kante etwa spiralförmig ist.

Auf diese Weise wird einerseits die Breite des oberen Schenkels im Bereich nahe dem Zentrum der Schleuderscheibe verbreitert, der Wurfflügel also insgesamt tiefer, so daß mehr Partikel eingefangen werden können. Andererseits ergibt sich durch die Krümmung der vorlaufenden Kante bei deren Eintritt in den Streugutstrahl eine Impulskraft auf die Partikel, die weitestgehend nach außen gerichtet ist. Dies gilt in jeder Drehlage des Wurfflügels, so daß auch hierdurch die Möglichkeit einer Reflexion der Partikel an der vorlaufenden Kante, die diese nach innen abprallen läßt, weitestgehend ausgeschlossen ist.

Durch die weitere Maßnahme, daß die Kappe die ihr naheliegende Unterkante des Auslaufschachtes nach oben überragt, ist weiterhin gewährleistet, daß auch zwischen der Unterkante des Auslaufschachtes und dem oberen Schenkel Partikel nicht nach innen verspritzt werden, vielmehr werden sie von der Kappe abgebremst und fallen allenfalls hinter den Wurfflügel auf die Schleuderscheibe. Dieser Vorteil wird noch dadurch begünstigt, daß der Radius der Kappe wenig kleiner ist als der Radius, der bezüglich der Achse der Schleuderscheibe am weitesten innen liegenden Begrenzung des Auslaufschachtes.

Üblicherweise werden die Schleuderscheiben von unten her mittels einer Antriebswelle angetrieben, die beispielsweise über ein Kegelradgetriebe an die Zapfwelle angeschlossen ist. Die Antriebswelle weist zu diesem Zweck eine Nabe auf, an der die Schleuderscheibe befestigt ist. Erfindungsgemäß kann nun die Kappe zum Befestigen der Schleuderscheibe auf der Nabe dienen.

Eine weiterhin bevorzugte Ausführungsform zeichnet sich dadurch aus, daß der Wurfflügel an seinem äußeren Ende, vom oberen Schenkel ausgehend, nach unten abgeschrägt ist.

Während sich bei kleinen Streumengen die Partikel vornehmsich im unteren Teil des Wurfflügels nach außen bewegen, steigen sie bei größeren Streumengen nach oben an, bis der Wurfflügel über seine gesamte Höhe belegt ist. Bei noch größeren Streumengen schließlich baut sich innerhalb des Wurfflügels eine gewisse Schichtdicke auf, die aufgrund der unterschiedlichen Beschleunigung der Partikel in den verschiedenen Schichten zu Unregelmäßigkeiten im Streubild führen. Aufgrund der Abschrägung verlassen die weiter oben im Wurfflügel bewegten Partikel den Wurfflügel früher als die unten bewegten Partikel. Dadurch ergibt sich, wie praktische Versuche gezeigt haben, eine Vergleichmäßigung des Streubildes auch bei großen Streubreiten. Die Abschrägung kann sich nur über einen Teil der Höhe oder auch über die gesamte Höhe erstrecken, so daß die Partikel auf unterschiedlichen Radien abgegeben werden und somit unterschiedliche Wurfweiten erreichen.

Schließlich kann gemäß einer zweckmäßigen Ausführungsform der Auslaufschacht einen von der Auslauföffnung nach unten zunehmenden Querschnitt aufweisen. Dieses Merkmal dient ähnlich wie der unter einem Freiwinkel angestellte obere Schenkel des Wurfflügels - in erster Linie dazu, den Rückstau des Streugutes im Auslaufschacht beim Vorbeilauf des Wurfflügels zu vermeiden, wodurch vor allem Mengenfehler vermieden werden.

Nachstehend ist die Erfindung an Hand von in der Zeichnung wiedergegebenen Ausführungsbeispielen beschrieben. In der Zeichnung zeigen:

Figur 1 eine schematische Teilansicht eines Zweischeiben-Schleuderstreuers;

Figur 2 ein Streubild-Diagramm;

Figur 3 eine der Figur 1 ähnliche Ansicht einer ersten Ausführungsform der Erfindung;

Figur 4 eine Draufsicht auf die Schleuderscheiben gemäß Figur 3;

Figur 5 das Querschnittsprofil eines Wurfflügels;

Figur 6 eine Draufsicht auf eine Schleuderscheibe in einer weiteren Ausführungsform;

Figur 7 eine der Figur 1 ähnliche Darstellung eines weiteren Ausführungsbeispiels;

Figur 8 eine vergrößerte Teilansicht der in Fig.7 im rechten Teil gezeigen Schleuderscheibe;

Figur 9 eine der Figur 1 entsprechende Ansicht einer weiteren Ausführungsform;

Figur 10 eine der Fig.6 ähnliche Ansicht mit einer abgewandelten Form der Wurfflügel und

Figur 11-13 verschiedene Querschnitte des Wurfflügels nach Fig.10.

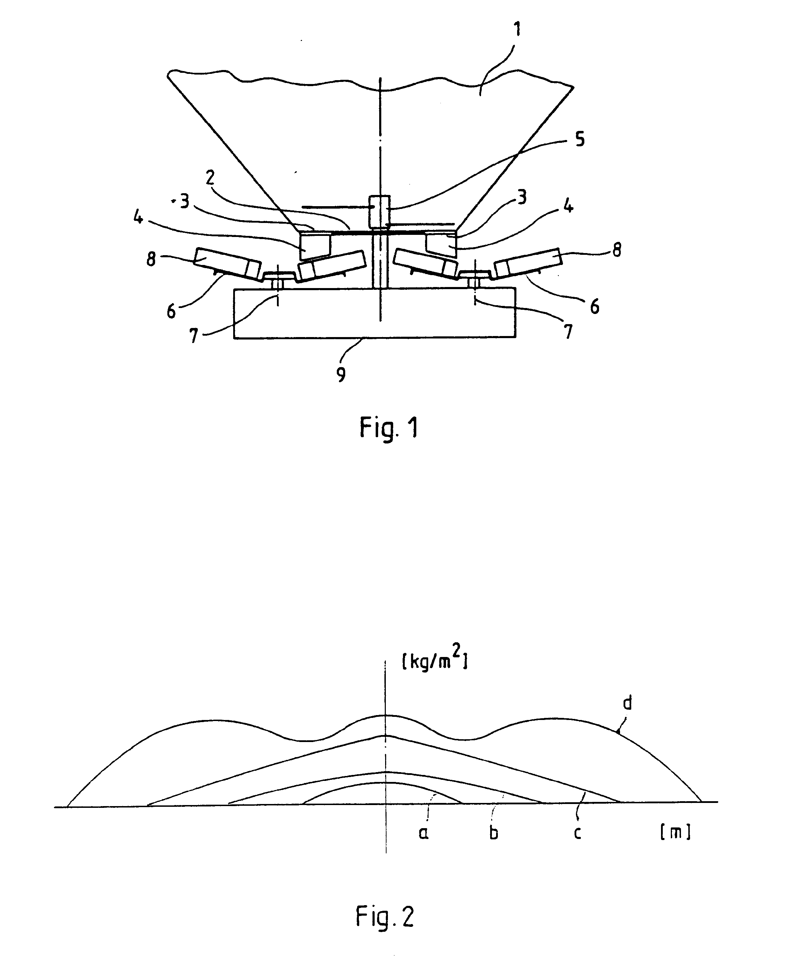

Der in Figur 1 schematisch und ausschnittsweise wiedergegebene Düngerstreuer weist einen trichterförmigen Vorratsbehälter 1 mit einem Boden 2, darin angeordneten Auslauföffnungen 3 und daran anschließende, die Auslauföffnungen nach unten verlängernde Auslaufschächte 4 auf. Innerhalb des Vorratsbehälters 1 ist ein den Dünger lockernder und rieselfähig haltender Rührer 5 angeordnet. Unterhalb des Bodens 2 des Vorratsbehälters 1 ist unter jedem Auslaufschacht 4 eine Schleuderscheibe 6 angeordnet, deren Drehachse gegenüber dem Auslaufschacht 4 jeweils nach außen versetzt ist. Jede Schleuderscheibe weist wenigstens einen, beim gezeigten Ausführungsbeispiel zwei Wurfflügel 8 auf, die sich vom Zentrum der Schleuderscheibe nach außen erstrecken. Die Schleuderscheiben 6 und der Rührer 5 werden beispielsweise von der Zapfwelle eines Schleppers über Kegelradgetriebe angetrieben, die in dem schematisch wiedergegebenen Getriebegehäuse 9 untergebracht sind.

Die Schleuderscheiben 6 sind bei dem in Figur 1 gezeigten Ausführungsbeispiel tellerförmig nach oben gewölbt, so daß auch die Wurfflügel 8 entsprechend geneigt nach oben verlaufen. Diese Ausbildung ist insbesondere für große Streubreiten geeignet, um eine günstige Ballistik für die die Schleuderscheibe 6 verlassenden Düngerpartikel zu erzielen.

Ein von einem Schleuderstreuer gemäß Figur 1 erzeugtes typisches Streubild für eine bestimmte Arbeitsbreite ist in dem Diagramm gemäß Figur 2 wiedergegeben, in welchem die Streudichte (Gewicht pro Fläche) über der Streubreite aufgetragen ist. Es sind vier charakteristische Streubilder für vier verschiedene Streumengen $a$, $b$, $c$ und $d$ gezeigt, wobei $a < b < c < d$ ist. Die Ordinate fällt mit der Längsachse des Schleppers bzw. der Fahrtrichtung zusammen. Aus Figur 2 ist ersichtlich, daß bei kleineren Streumengen die Streudichte von einem Maximum hinter dem Schlepper stetig nach außen abfällt. Je größer die Streumenge wird, um so ausgeprägter wird die Überhöhung in der Schlepperachse. Ab einer gewissen Streumenge bildet sich ein Streubild aus, wie es in Figur 2 an Hand der Kurve $d$ die größte Streumenge gezeigt ist. Es handelt sich hier nicht mehr um eine stetige Kurve, vielmehr weist sie neben der mittigen Überhöhung nach außen hin je eine Senke und daran anschließend wiederum Überhöhungen auf, von denen aus die Streudichte dann wesentlich steiler abfällt. Die Kurve $d$ gilt beispielsweise für eine Schleuderscheibe mit zwei Wurfflügeln. Weist diese hingegen vier Wurfflügel auf, so sind die beiden seitlichen Überhöhungen nicht oder weniger ausgeprägt vorhanden, dafür jedoch ist die mittlere Überhöhung wesentlich stärker ausgeprägt.

Bei kleinen und mittleren Streumengen lassen sich die Ausdünnungen im äußeren Bereich dadurch kompensieren, daß beim Anschlußfahren für eine Überlappung der Streubilder gesorgt wird, so daß sich über die gesamte bestreute Fläche ein nur schwach welliges Streubild ergibt. Bei größeren Streumengen ist ein Kompensieren allenfalls noch in den Randbereichen möglich, jedoch lassen sich weder die mittlere Überhöhung, noch die daran anschließenden Senken und auch nur äußerst mangelhaft die beiden seitlichen Überhöhungen kompensieren.

Während die mittlere Überhöhung fast ausschließlich durch den sogenannten Pralleffekt bzw. durch die Prallverluste entsteht, das heißt durch jene Düngerpartikel, die von den Wurfflügeln 8 nicht in kontrollierter Weise erfaßt werden, sondern auf der Scheibe selbst und an den am Auslaufschacht 4 vobeilaufenden Wurfflügeln 8 reflektiert werden und sich vornehmlich in der Mitte ablagern, entstehen die beiden seitlichen Überhöhungen durch den sogenannten Mengeneffekt und sind vornehmlich auf nicht beeinflußbare strömungstechnische Vorgänge im Wurfflügel zurückzuführen. Auch mit zunehmender Arbeitsbreite nehmen die Prallverluste aufgrund des notwendigerweise größeren Mengendurchsatzes zu, wie auch der Mengeneffekt stärker wird.

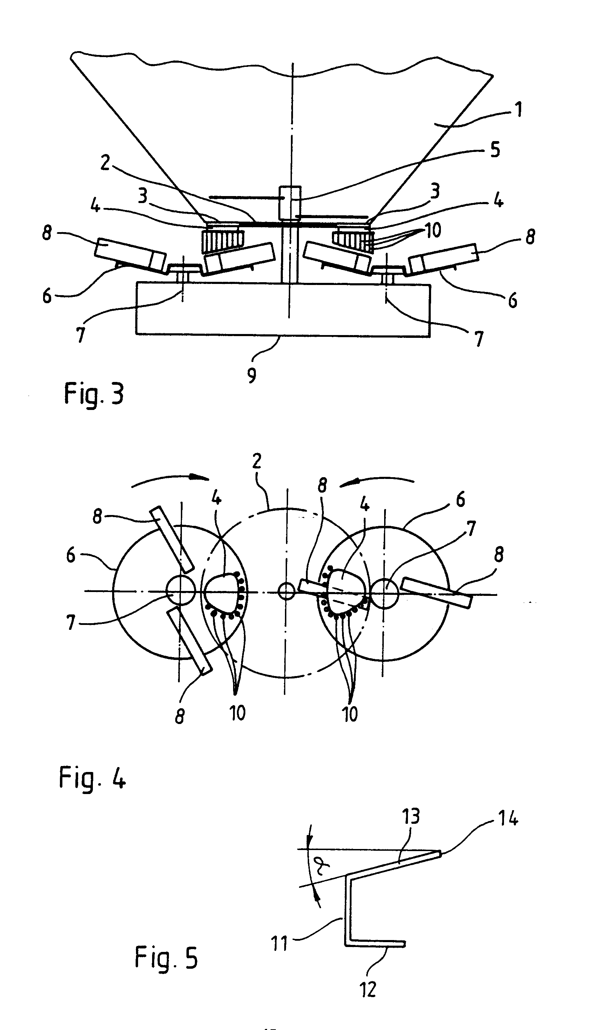

Figur 3 zeigt eine erste Ausführungsform der Erfindung, bei der außenseitig am Auslaufschacht 4 flexible Materialstreifen 10, beispielsweise in Form von Kunststoff-Borstenbündel angeordnet sind. Sie verlaufen im wesentlichen senkrecht und ragen bis in die Bewegungsbahn der Wurfflügel 8 hinein. Sie sind, wie Figur 4 zeigt, an allen Begrenzungen des Auslaufschachtes 4 angeordnet, an denen sie bei Eintauchen des Wurfflügels in den Streugutstrahl so ausweichen können, daß sie den Streugutstrahl nicht beeinflussen können. Der Streugutstrahl wird also an diesen Begrenzungen durch die flexiblen Materialstreifen 10 eingefaßt und geführt, insbesondere können die Partikel nicht nach vorne und innen reflektiert werden. Andererseits geben die flexiblen Materialstreifen 10 in Drehrichtung nach, sobald sie vom Wurfflügel 8 erfaßt werden.

Die Wurfflügel 8 sind vorzugsweise aus einem U-Profil gebildet, bestehen also, wie Figur 5 erkennen läßt, aus einem etwa senkrecht stehenden Steg 11, einem unteren Schenkel 12, mittels dessen der Wurfflügel 8 auf der Schleuderscheibe 6 befestigt ist, und einem oberen Schenkel 13. Der obere Schenkel 13 ist mit Vorteil von der vorlaufenden Kante 14, die zuerst in den Streugutstrahl eintritt, nach hinten abfallend geneigt, so daß ein Freiwinkel entsteht.

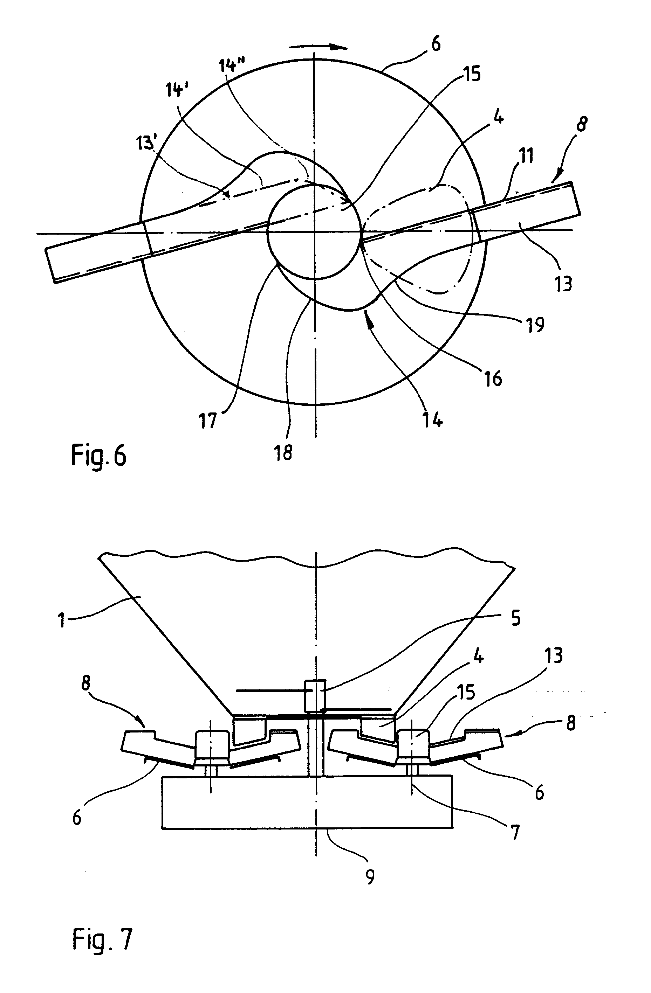

Figur 6 zeigt zunächst bei dem links wiedergegebenen Flügel mit strichpunktierten Linien 13' einen Wurfflügel, der an seinem inneren Ende über das Zentrum der Schleuderscheibe hinaus auf die andere Seite gezogen ist. Die vorlaufende Kante 14' ist am inneren Ende am Steg angesetzt und verläuft mit einer Krümmung 14″ in den geradlinigen Abschnitt ein, der etwa parallel zum Steg verläuft.

Figur 6 zeigt ferner mit durchgezogenen Linien ein optimiertes Ausführungsbeispiel, bei dem im Zentrum der Schleuderscheibe 6 eine zylindrische Kappe 15 angeordnet ist. Die Wurfflügel 8 liegen mit ihrem inneren Ende an der zylindrischen Mantelfläche der Kappe 15 an. Beispielsweise endet der Steg 11 des Wurfflügels 8 mit seiner senkrechten Innenkante 16 am Mantel der Kappe 15, während der obere Schenkel 13 über diese Innenkante 16 hinaus nach innen gezogen ist. Die vorlaufende Kante des Schenkels 13 setzt etwa an einer Stelle 17 an der Kappe 15 an, die in Verlängerung des Stegs 11 liegt. Von dort verläuft die vorlaufende Kante in einer spiralförmigen Krümmung 18 nach außen. Hieran schließt sich eine entgegengesetzt gerichtete Krümmung 19 an und schließlich geht die vorlaufende Kante 14 in einen außen auslaufenden linearen Abschnitt über.

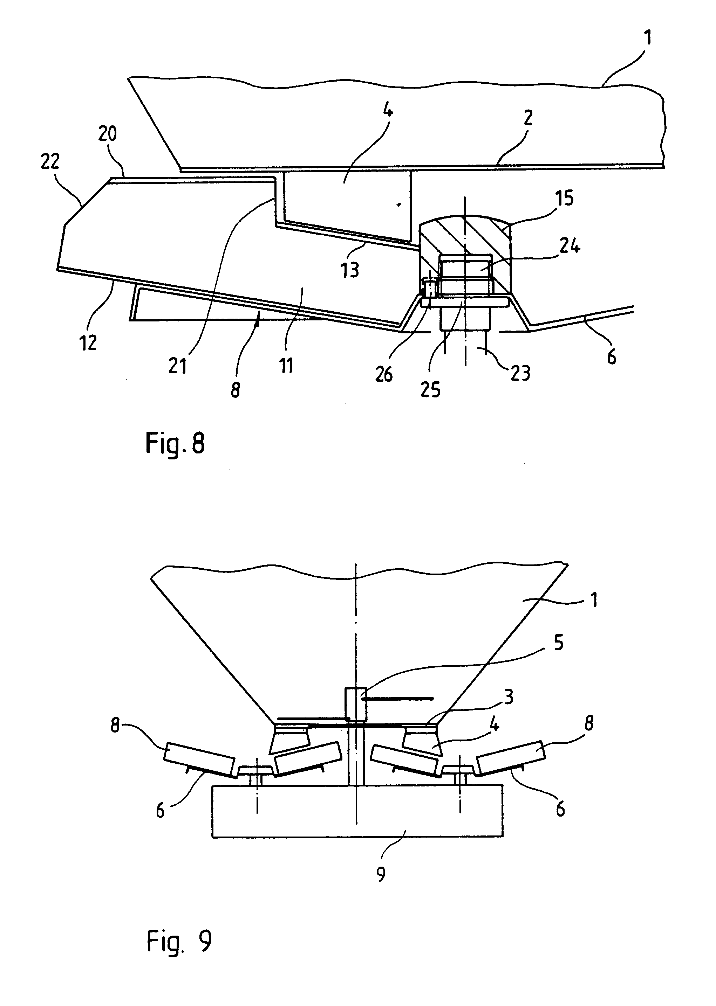

Der radiale Abstand der inneren Begrenzung des Auslaufschachtes 4 ist, wie Figur 7 erkennen läßt, etwas größer als der Radius der Kappe 15. Ferner überragt die Kappe 15 die Unterkante des Auslaufschachtes 4 nach oben, so daß im Zentrum ein vollständiger Abschluß gegeben ist. Bei dem Ausführungsbeispiel gemäß Figur 7 ist ferner erkennbar, daß der obere Schenkel 13 im äußeren Abschnitt des Wurfflügels 8 abgesetzt ist. Einzelheiten hierzu sind in Figur 8 zu erkennen. Der Schenkel 13 weist im Bereich außerhalb des Auslaufschachtes 4 einen erhöhten Abschnitt 20 auf, der insbesondere höher liegt als die Unterkante des Auslaufschachtes und beim gezeigten Ausführungsbeispiel in einer zum Boden 2 parallelen Eben angeordnet ist. Die am Übergang gebildete Innenkante 21 des Stegs 11 liegt auf einem Radius, der wenig größer ist als derjenige der äußeren Begrenzung des Auslaufschachtes 4. Eine gleiche Ausbildung ist selbstverständlich auch bei solchen Schleuderscheiben möglich, die nicht tellerartig nach innen gewölbt sind, sondern als einfache horizontale Platten ausgebildet sind, wobei dann der obere Schenkel 13 und dessen äußerer Abschnitt 20 in parallelen Ebenen liegen, die wiederum parallel zum unteren Schenkel 12 liegen können.

Figur 8 zeigt ferner, daß der Wurfflügel 8 an seinem äußeren Ende von oben her nach außen abgeschrägt ist, so daß die im oberen Bereich des Wurfflügels 8 nach außen beschleunigten Partikel den Wurfflügel früher bzw. auf kleineren Radien verlassen als die sich unten bewegenden Partikel.

Die Schleuderscheibe 6 wird von einer Antriebswelle 23 angetrieben, die mit einer Nabe 24 versehen ist. Diese kann ein Außengewinde aufweisen, auf das die Kappe 15 aufschraubbar ist. Auf diese Weise läßt sich mittels der Kappe 15 die Schleuderscheibe 6 auf einem Bund 25 der Nabe 24 verspannen. Zur Mitnahme ist ferner am Bund 25 ein Mitnehmerstift 26 angeordnet, der die Schleuderscheibe 6 durchsetzt und in eine Nut an der Kappe 15 eingreift.

Schließlich zeigt das Ausführungsbeispiel gemäß Figur 9 einen Ablaufschacht 4, dessen freier Querschnitt sich von der Auslauföffnung 3 nach unten erweitert, so daß der Mengendurchsatz durch Rückstaueffekte nicht negativ beeinflußt wird.

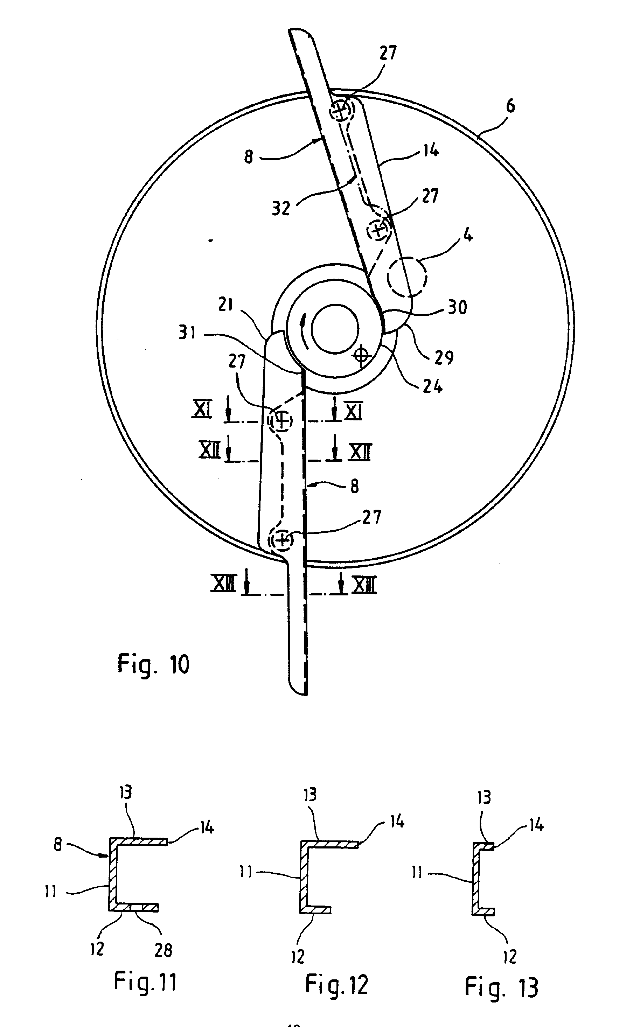

In den Figuren 10 bis 12 ist eine vereinfachte Ausführungsform der Wurfflügel 8 gezeigt. Die Wurfschaufeln 8 erstrecken sich vom Zentrum der Schleuderscheibe 6 bzw. von deren Nabe 24 radiusparallel nach außen und überragen mit ihrem äußeren Ende die Peripherie der Schleuderscheibe, wobei die Größe des Überstandes an den beiden Wurfschaufeln 8 gegebenenfalls unterschiedlich sein kann. Die Wurfschaufeln 8 durchqueren mit ihrem innenliegenden Bereich den aus der Auslauföffnung bzw. dem Auslaufschacht 4, der in Figur 10 mit gestrichelten Linien wiedergegeben ist, austretenden Streugutstrahl und schneiden aus diesem eine Scheibe ab, die je nach Mengendurchsatz eine unterschiedliche Partikeldichte aufweist. Die Wurfschaufeln 8 sind mittels jeweils zweier Schrauben 27 oder dergleichen an der Schleuderscheibe 6 befestigt.

Jede Wurfschaufel ist, wie bereits angedeutet von einem U-Profil gebildet, das über die Länge der Wurfschaufel eine variierende Form aufweist. In Figur 11 ist ein Querschnitt XI - XI gemäß Figur 10 gezeigt. Der obere Schenkel 13 des U-Profils weist eine Länge auf, die mindestens der Ausdehnung des Auslaufschachtes 4 in der Bewegungsrichtung der Wurfschaufel entspricht. Die Höhe des Stegs 11 des U-Profils ist so bemessen, daß der obere Schenkel 13, wie Figur 1 zeigt, knapp unterhalb der Unterkante des Auslaufschachtes 4 vorbeiläuft. Der untere Schenkel 12 hingegen ist kürzer ausgebildet und weist seine größte Breite im Bereich von Löchern 28 auf, die von den Befestigungsmitteln 27 (siehe Figur 10) durchgriffen sind. Zwischen den Befestigungsmitteln ist der untere Schenkel 12, wie Figur 12 zeigt, noch kürzer ausgebildet. Die geringste Breite weisen der obere Schenkel 13 und der untere Schenkel 12 in dem weiter außenliegenden Bereich auf, wie dies Figur 13 zeigt. Die Breite des oberen Schenkels 13 kann am äußeren Ende etwa nur noch 1/6 der Breite dieses Schenkels im Bereich des Auslaufschachtes 4 betragen.

Beim gezeigten Ausführungsbeispiel nimmt die Breite des oberen Schenkels 13 sprungartig von innen nach außen ab. Dieser Sprung liegt, wie Figur 2 zeigt, im Bereich der Peripherie der Schleuderscheibe 6. Statt dessen kann die Breite auch in mehreren Stufen oder aber kontinuierlich, ähnlich der Ausführungsform gemäß Figur 6, von innen nach außen reduziert werden.

Beim gezeigten Ausführungsbeispiel setzt der obere Schenkel 13 des Wurfflügels 8 an der Nabe 24 mit einem Radius 29 an, der in die geradlinige Vorderkante des Schenkels übergeht. Ferner liegt der obere Schenkel rückseitig mit einem entsprechenden Krümmungsradius 30 der Nabe 24 an und es liegt der Steg mit seinem inneren Ende 31, wie gleichfalls Figur 10 zeigt, an der Nabe 24 an.

In bevorzugter Ausführungsform erstreckt sich der breitere Abschnitt des oberen Schenkels 12 nur über eine relativ kurze Länge, wie dies in Figur 2 mit strichpunktierter Linie 32 angedeutet ist. Diese Länge braucht nur wenig größer sein als die in Richtung des Wurfflügels 8 gemessene Ausdehnung des Streugutstrahls.

## Patentansprüche

1. Schleuderstreuer für rieselfähiges Streugut, insbesondere Dünger, bestehend aus einem Vorratsbehälter (1) mit wenigstens einer einstellbaren Auslauföffnung (3) und einem daran anschließenden Auslaufschacht (4), aus dem das Streugut im Fallstrom strahlartig austritt, und einer darunter um eine versetzt zum Auslauf angeordnete Achse (7) umlaufenden Schleuderscheibe (6) mit wenigstens einem Wurfflügel (8), der sich über die gesamte radiale Ausdehnung des Streugutstrahls zum Umfang der Schleuderscheibe erstreckt und im Querschnitt ein U-Profil bildet, das mit seinem unteren Schenkel (12) an der Schleuderscheibe (7) befestigt ist und beim Eintauchen in den Streugutstrahl die Streugutpartikel in den Wurfflügel (8) ablenkt und nach außen beschleunigt, dadurch gekennzeichnet, daß der Auslaufschacht (4) zumindest entlang seiner der Eintrittsseite des Wurfflügels (8) in den Düngerstrahl gegenüberliegenden Begrenzung mit flexiblen, in Drehrichtung des Wurfflügels ausweichenden Materialstreifen (10) versehen ist, die in die Bewegungsbahn des Wurfflügels (8) hineinragen.

2. Schleuderstreuer nach Anspruch 1, dadurch gekennzeichnet, daß die flexiblen Materialstreifen (10) an denjenigen Begrenzungen des Ablaufschachtes (4) angeordnet sind, an denen sie bei Durchlauf des Wurfflügels (8) durch den Düngerstrahl nicht in den Düngerstrahl ausweichen.

3. Schleuderstreuer nach Anspruch 1 oder 2, dadurch gekennzeichnet, daß die flexiblen Materialstreifen (10) als Borsten- bzw. Borstenbündel aus Kunststoff ausgebildet sind.

4. Schleuderstreuer nach einem der Ansprüche 1 bis 3, dadurch gekennzeichnet, daß der obere Schenkel (13) des U-Profils jedes Wurfflügels (8) zumindest mit seiner vorlaufenden Kante (14) und in dem am Auslaufschacht (4) vorbeilaufenden Abschnitt in einer Ebene parallel zur Unterkante des Auslaufschachtes mit geringem Abstand unter dieser angeordnet ist.

5. Schleuderstreuer nach einem der Ansprüche 1 bis 5, dadurch gekennzeichnet, daß der obere Schenkel (13) jedes Wurfflügels (8) von seiner vorlaufenden Kante (14) entgegen der Drehrichtung unter Bildung eines Freiwinkels nach unten geneigt ist.

6. Schleuderstreuer nach einem der Ansprüche 1 bis 5, dadurch gekennzeichnet, daß die vorlaufende Kante des oberen Schenkels (13) jedes Wurfflügels (8) an dessen innerem Ende am Steg (11) ansetzt und in einer Krümmung nach vorne in einen geradlinigen, zum Steg gegebenenfalls parallelen Abschnitt übergeht.

7. Schleuderstreuer nach einem der Ansprüche 1 bis 6, dadurch gekennzeichnet, daß der obere Schenkel (13) des Wurfflügels (8) zumindest in seinem den Streugutstrahl durchquerenden Bereich eine Breite aufweist, die mindestens annähernd der in Richtung des Durchlaufs des Wurfflügels durch den Streugutstrahl gemessenen Ausdehnung desselben entspricht.

8. Schleuderstreuer nach einem der Ansprüche 1 bis 7, dadurch gekennzeichnet, daß die Breite des oberen Schenkels (13) des Wurfflügels (8) von dessen den Streugutstrahl durchquerenden Bereich nach außen abnimmt.

9. Schleuderstreuer nach einem der Ansprüche 1 bis 8, dadurch gekennzeichnet, daß die Breite des oberen Schenkels (13) des Wurfflügels (8) in einer stetigen kurve nach außen abnimmt.

10. Schleuderstreuer nach einem der Ansprüche 1 bis 8, dadurch gekennzeichnet, daß die Breite des oberen Schenkels (13) des Wurfflügels (8) mit wenigstens einem stufenförmigen Sprung nach außen abnimmt.

11. Schleuderstreuer nach einem der Ansprüche 1 bis 10, dadurch gekennzeichnet, daß der die größte Breite aufweisende Abschnitt des oberen Schenkels (13) sich nur wenig über die in Richtung des Wurfflügels (8) gemessene größte Ausdehnung des Streugutstrahls erstreckt.

12. Schleuderstreuer nach einem der Ansprüche 1 bis 11 mit einem Wurfflügel, der über die Peripherie der Schleuderscheibe nach außen ragt, dadurch gekennzeichnet, daß der obere Schenkel (13) des Wurfflügels (8) zumindest in seinem über die Peripherie der Schleuderscheibe (6) hinausragenden Bereich eine geringere Breite als in seinem innerhalb der Peripherie liegenden Bereich aufweist.

13. Schleuderstreuer nach einem der Ansprüche 1 bis 12, dadurch gekennzeichnet, daß der untere Schenkel (12) des Wurfflügels (8) in seinem der Schleuderscheibe (6) aufliegenden Bereich eine geringere Breite als der obere Schenkel (13) aufweist.

14. Schleuderstreuer nach einem der Ansprüche 1 bis 13, dadurch gekennzeichnet, daß der untere Schenkel (12) des Wurfflügels (8) in seinem über die Peripherie der Schleuderscheibe (6) hinausragenden Bereich etwa die gleiche Breite wie der obere Schenkel (13) aufweist.

15. Schleuderstreuer nach einem der Ansprüche 1 bis 14, dadurch gekennzeichnet, daß der untere Schenkel (12) des Wurfflügels (8) als schmale Leiste ausgebildet ist, die lediglich im Bereich der den Wurfflügel (8) an der Schleuderscheibe (6) festlegenden Befestigungsmittel (27, 28) auf ein Maß verbreitert ist, das die notwendige Auflage für die Befestigungsmittel schafft.

16. Schleuderstreuer nach einem der Ansprüche 1 bis 15, dadurch gekennzeichnet, daß der Wurfflügel (8) in seinem den Streugutstrahl durchquerenden Bereich eine Breite von ca. 60 mm und in seinem äußeren Bereich eine Breite von ca. 10 mm aufweist.

17. Schleuderstreuer nach einem der Ansprüche 1 bis 16, dadurch gekennzeichnet, daß jeder Wurfflügel (8) mit seinem inneren Ende über das Zentrum der Schleuderscheibe (6) hinaus auf deren andere Seite reicht.

18. Schleuderstreuer nach einem der Ansprüche 1 bis 17, dadurch gekennzeichnet, daß der obere Schenkel (13) jedes Wurfflügels (8) in dessen äußerem Abschnitt (20), der - vom Zentrum der Schleuderscheibe (6) gesehen - jenseits des Auslaufschachtes (4) liegt, höher angeordnet ist als die Unterkante des Auslaufschachtes.

19. Schleuderstreuer nach einem der Ansprüche 1 bis 18, dadurch gekennzeichnet, daß der Steg (11) des U-Profiles jedes Wurfflügels (8) in dessen äußerem Abschnitt mit seiner am Übergang zu dem höher liegenden Schenkel (20) befindlichen Innenkante (21) auf einem Radius der Schleuderscheibe (6) liegt, der wenig größer ist als derjenige, der radial am weitesten außen liegenden Begrenzung des Auslaufschachtes (4).

20. Schleuderstreuer nach einem der Ansprüche 1 bis 19, dadurch gekennzeichnet, daß der höher liegende Schenkel (20) im äußeren Abschnitt des Wurfflügels (8) parallel zum Boden (2) des Vorratsbehälters (1) angeordnet ist.

21. Schleuderstreuer nach einem der Ansprüche 1 bis 20, dadurch gekennzeichnet, daß der Steg (11) und der obere Schenkel (13) jedes Wurfflügels (8) an ihrem inneren Ende (16, 17) an einer im Zentrum der Schleuderscheibe (6) angeordneten zylindrischen Kappe (15) anliegen.

22. Schleuderstreuer nach einem der Ansprüche 1 bis 21, dadurch gekennzeichnet, daß der obere Schenkel (13) am inneren Ende über die gesamte Länge seiner Kante an der Kappe (15) anliegt.

23. Schleuderstreuer nach einem der Ansprüche 1 bis 22, dadurch gekennzeichnet, daß die vorlaufende Kante (14) des oberen Schenkels (13) an einer der Anlagestelle (16) des Stegs (11) an der Kappe (15) in der Verlängerung des Stegs etwa gegenüberliegenden Stelle der Kappe (15) ansetzt, in einer ersten Krümmung (18) mit zunehmendem radialem Abstand von der Achse (7) der Schleuderscheibe (6) nach vorne gezogen ist und mit einer daran anschließenden entgegengesetzten Krümmung (19) in eine zum Steg (11) etwa parallele Gerade übergeht.

24. Schleuderstreuer nach einem der Ansprüche 1 bis 23, dadurch gekennzeichnet, daß die erste Krümmung der vorlaufenden Kante etwa spiralförmig ist.

25. Schleuderstreuer nach einem der Ansprüche 1 bis 24, dadurch gekennzeichnet, daß die Kappe (15) die ihr naheliegende Unterkante des Auslaufschachtes (4) nach oben überragt.

26. Schleuderstreuer nach einem der Ansprüche 1 bis 25, dadurch gekennzeichnet, daß der Radius der Kappe (15) wenig kleiner ist als der Radius der bezüglich der Achse (7) der Schleuderscheibe (6) am weitesten innen liegenden Begrenzung des Auslaufschachtes (4).

27. Schleuderstreuer nach einem der Ansprüche 1 bis 26, mit einer unterhalb der Schleuderscheibe angeordneten Antriebswelle, auf deren Nabe die Schleuderscheibe befestigt ist, dadurch gekennzeichnet, daß die Kappe (15) zum Befestigen der Schleuderscheibe (6) auf der Nabe (24) dient.

28. Schleuderstreuer nach einem der Ansprüche 1 bis 27, dadurch gekennzeichnet, daß der Wurfflügel (8) an seinem äußeren Ende vom oberen Schenkel (13, 20) ausgehend nach unten abgeschrägt ist.

29. Schleuderstreuer nach einem der Ansprüche 1 bis 28, dadurch gekennzeichnet, daß der Auslaufschacht (4) einen von der Auslauföffnung (3) nach unten zunehmenden Querschnitt aufweist.

## Claims

1. Centrifugal broadcaster for free-flowing broadcasting material, particularly fertilizer, comprising a hopper (1) with at least one adjustable discharge opening (3) and a discharge shaft (4) connected thereto from which the broadcasting material is downwardly discharged in jet-like manner, and a centrifugal disk (8) below the same and rotating about an oxis (7) displaced with respect to the outlet and having at least one spreading blade (8), which extends over the entire radial extension of the broadcasting material jet to the circumference of the centrifugal disk and in cross-section forms a U-profile, whose lower leg (12) is fixed to the centrifugal disk and on insertion in the broadcasting material jet deflects the broadcasting material particles into the spreading blade (8) and accelerates same outwards, characterized in that the discharge shaft (4), at least along its boundary facing the entrance side of the spreading blade (8) into the fertilizer jet, is provided with flexible material strips (10) giving way in the rotation direction of the spreading blade and which project into the movement path of the spreading blade (8).

2. Centrifugal broadcaster according to claim 1, characterized in that the flexible material strips (10) are located on those boundaries of the discharge shaft (4), on which they do not fall back into the fertilizer jet during the passage of the spreading blade (8) through said fertilizer jet.

3. Centrifugal broadcaster according to claims 1 or 2, characterized in that flexible material strips (10) are constructed as plastics material bristles or bristle bundles.

4. Centrifugal broadcaster according to one of the claims 1 to 3, characterized in that the upper leg (13) of the U-profile of each spreading blade (8), at least with its leading edge (14) and in the portion moving past the discharge shaft (4) is located in a plane parallel to the lower edge of the discharge shaft and at a limited distance below the same.

5. Centrifugal broadcaster according to one of the claims 1 to 5, characterized in that the upper leg (13) of each spreading blade (8) is inclined downwards from its leading edge (14) counter to the rotation direction and accompanied by the formation of a clearance angle.

6. Centrifugal broadcaster according to one of the claims 1 to 5, characterized in that the leading edge of the upper leg (13) of each spreading blade (8) is attached at its inner end to the web (11) and in a forward curvature passes into a linear portion, which is optionally parallel to the web.

7. Centrifugal broadcaster according to one of the claims 1 to 6, characterized in that the upper leg (13) of the spreading blade (8), at least in its area crossing the broadcasting material jet, has a width which at least approximately corresponds to the extension thereof measured through the broadcasting material jet in the direction of the passage of the spreading blade.

8. Centrifugal broadcaster according to one of the claims 1 to 7, characterized in that the width of the upper leg (13) of the spreading blade (8) decreases outwards from its area crossing the broadcasting material jet.

9. Centrifugal broadcaster according to one of the claims 1 to 8, characterized in that the width of the upper leg (13) of the spreading blade (8) decreases outwards in a constant curve.

10. Centrifugal broadcaster according to one of the claims 1 to 8, characterized in that the width of the upper leg (13) of the spreading blade (8) decreases outwards with at least one step-like jump.

11. Centrifugal broadcaster according to one of the claims 1 to 10, characterized in that the portion of the upper leg (13) having the greatest width only extends to a limited extend over the maximum extension of the broadcasting material jet measured in the direction of the spreading blade (8).

12. Centrifugal broadcaster according to one of the claims 1 to 11 with a spreading blade, which projects outwards over the periphery of the centrifugal disk, characterized in that the upper leg (13) of the spreading blade (8), at least in its area projecting over the periphery of the centrifugal disk (6), has a smaller width than in its area located within the periphery.

13. Centrifugal broadcaster according to one of the claims 1 to 12, characterized in that the lower leg (12) of the spreading blade (8) in its area resting on the centrifugal disk (6) has a smaller width the upper leg (13).

14. Centrifugal broadcaster according to one of the claims 1 to 13, characterized in that the lower leg (12) of the spreading blade (8) in its area projecting over the periphery of the centrifugal disk (6) has roughly the same width as the upper leg (13).

15. Centrifugal broadcaster according to one of the claim 1 to 14, characterized in that the lower leg (12) of the spreading blade (8) is constructed as a narrow ledge, which only in the vicinity of the fastening means (27, 28) fixing the spreading blade (8) to the centrifugal disk (6) is widened to an amount providing the necessary bearing surface for the fastening means.

16. Centrifugal broadcaster according to one of the claims 1 to 15, characterized in that in its area crossing the broadcasting material jet the spreading blade (8) has a width of approximately 60 mm, whilst in its outer area it has a width of approximately 10 mm.

17. Centrifugal broadcaster according to one of the claims 1 to 16, characterized in that the inner end of each spreading blade (8) extends over the centre of the centrifugal disk (6) to the other side thereof.

18. Centrifugal broadcaster according to one of the claims 1 to 17, characterized in that the upper leg (13) of each spreading blade (8) in its outer portion (20) which, considered from the centre of the centrifugal disk (6), is located on the other side of the discharge shaft (4), is higher than the lower edge of the discharge shaft.

19. Centrifugal broadcaster according to one of the claims 1 to 18, characterized in that the web (11) of the U-profile of each spreading blade (8) in the outer portion thereof is located with its inner edge (21) positioned at the transition to the higher leg (20) on a radius of the centrifugal disk (6), which is slightly larger than that of the radially furthest outward boundary of the discharge shaft (4).

20. Centrifugal broadcaster according to one of the claims 1 to 19, characterized in that the higher leg (20) in the outer portion of the spreading blade (8) is positioned parallel to the bottom (2) of the hopper (1).

21. Centrifugal broadcaster according to one of the claims 1 to 20, characterized in that the web (11) and the upper leg (13) of each spreading blade (8) at its inner end (16, 17) engages on a cylindrical cap (15) positioned in the centre of the centrifugal disk (6).

22. Centrifugal broadcaster according to one of the claims 1 to 21, characterized in that at the inner end the upper leg (13) engages over the entire length of its edge on the cap (15).

23. Centrifugal broadcaster according to one of the claims 1 to 22, characterized in that the leading edge (14) of the upper leg (13) is attached to a point of the cap (15) roughly facing the engagement point (16) of the web (11) on the cap (15) in the extension of the web, is drawn forwards in a first curvature (18) with increasing radial distance from the axis (7) of the centrifugal disk (6) and with an opposite curvature (19) connected thereto passes into a line roughly parallel to the web (11).

24. Centrifugal broadcaster according to one of the claims 1 to 23, characterized in that the first curvature of the leading edge is approximately spiral.

25. Centrifugal broadcaster according to one of the claims 1 to 24, characterized in that the cap (15) projects upwards over the lower edge of the discharge shaft (4) closer to it.

26. Centrifugal broadcaster according to one of the claims 1 to 25, characterized in that the radius of the cap (15) is slightly smaller than the radius of the furthest inwards boundary of the discharge shaft (4) with respect to the axis (7) of the centrifugal disk (6).

27. Centrifugal braodcaster according to one of the claims 1 ot 26 with a driving shaft arranged below the centrifugal disk and to whose hub is fixed the latter, characterized in that the cap (15) is used for fixing the centrifugal disk (6) to the hub (24).

28. Centrifugal broadcaster according to one of the claims 1 to 27, characterized in that the outer end of the spreading blade (8) is bevelled downwards starting from the upper leg (13, 20).

29. Centrifugal broadcaster according to one of the claims 1 to 28, characterized in that the discharge shaft (4) has a cross-section which increases downwards from the discharge opening (3).

## Revendications

1. Épandeur centrifuge pour un produit en vrac coulant, en particulier pour engrais, composé d'un réservoir de stockage (1) avec au moins une ouverture d'évacuation (3) réglable et un puits d'évacuation (4) s'y raccordant, à partir duquel le produit à épandre sort en formant un courant de chute en jet, et un disque éjecteur (6), tournant au-dessous autour d'un axe (7) décalé par rapport à l'évacuation et comportant au moins une ailette d'éjection (8), qui s'étend sur toute l'étendue radiale du jet de produit à épandre allant à la périphérie du disque d'éjection et dont la section transversale forme un profil en U, fixé au disque d'éjection (7) par sa branche inférieure (12) et déviant, lors de sa pénétration dans le jet de produit à épandre, les particules de produit à épandre, dans les ailettes d'éjection (8) et les accélérant vers l'extérieur, caractérisé en ce que le puits d'évacuation (4) est pourvu, au moins le long de sa délimitation opposée au côté entrée de l'ailette d'éjection (8) dans le jet d'engrais, de bandes de matériau (10) flexibles, se déformant dans le sens de rotation de l'ailette d'éjection, qui pénètrent dans la trajectoire de déplacement de l'ailette d'éjection (8).

2. Épandeur centrifuge selon la revendication 1, caractérisé en ce que les bandes de matériau flexibles (10) sont disposées sur les délimitations du puits d'évacuation (4) sur lesquelles elles ne se déforment pas dans le jet d'engrais lors du passage de l'ailette d'éjection (8) dans le jet d'engrais.

3. Épandeur centrifuge selon la revendication 1 ou 2, caractérisé en ce que les bandes de matériau flexibles (10) sont réalisée sous forme de brosses, respectivement de faisceaux de brosses en matériau synthétique.

4. Épandeur centrifuge selon l'une des revendications 1 à 3, caractérisé en ce que la branche supérieure (13) du profilé en U de chaque ailette d'éjection (8), au moins par son arête avant (14) et dans la section défilant en avant sur le puits d'évacuation (4), est disposée dans un plan parallèle à l'arête inférieure du puits d'évacuation, à une faible distance au-dessous de celui-ci

5. Épandeur centrifuge selon l'une des revendications 1 à 3, caractérisé en ce que la branche supérieure (13) de chaque ailette d'éjection (8) est inclinée vers le bas par son arête avant (14), à l'inverse du sens de rotation, en formant un angle libre.

6. Épandeur centrifuge selon l'une des revendications 1 à 5, caractérisé en ce que l'arête avant de la branche supérieure (13) de chaque ailette d'éjection (8) est épaissie à son extrémité intérieure sur l'âme (11) et se transforme en une courbure vers l'avant, en une section rectiligne, le cas échéant parallèle à l'âme.

7. Épandeur centrifuge selon l'une des revendications 1 à 6, caractérisé en ce que la branche supérieure (13) de l'ailette d'éjection (8) présente, au moins dans sa zone traversant le jet de produit à épandre, une largeur qui correspond au moins à peu près à l'étendue du jet de produit à épandre mesurée en direction du passage de l'ailette d'éjection dans celui-ci.

8. Épandeur centrifuge selon l'une des revendications 1 à 7, caractérisé en ce que la largeur de la branche supérieure (13) de l'ailette d'éjection (8) diminue vers l'extérieur, depuis sa zone traversant le jet de produit à épandre.

9. Épandeur centrifuge selon l'une des revendications 1 à 8, caractérisé en ce que la largeur de la branche supérieure (13) de l'ailette d'éjection (8) diminue vers l'extérieur, en suivant une courbe régulière.

10. Épandeur centrifuge selon l'une des revendications 1 à 8, caractérisé en ce que la largeur de la branche supérieure (13) de l'ailette d'éjection (8) diminue vers l'extérieur, avec au moins un saut en forme de gradin.

11. Épandeur centrifuge selon l'une des revendications 1 à 10, caractérisé en ce que la section, présentant la plus grande largeur, de la branche supérieure (13) ne s'étend que peu au-delà de la plus grande étendue du jet de produit à épandre, mesurée dans la direction de l'ailette d'éjection (8).

12. Épandeur centrifuge selon l'une des revendications 1 à 11, avec une ailette d'éjection sortant à l'extérieur, sur la périphérie du disque d'éjection, caractérisé en ce que la branche supérieure (13) de l'ailette d'éjection (8) présente, au moins dans sa zone sortant sur la périphérie du disque d'éjection (6), une moindre largeur que dans sa zone située à l'intérieur de la périphérie.

13. Épandeur centrifuge selon l'une des revendications 1 à 12, caractérisé en ce que la branche inférieure (12) de l'ailette d'éjection (8) présente dans sa zone surplombant le disque d'éjection (6) une moindre largeur que la branche supérieure (13).

14. Épandeur centrifuge selon l'une des revendications 1 à 13, caractérisé en ce que la branche inférieure (12) de l'ailette d'éjection (8) présente, dans sa zone dépassant sur la périphérie du disque d'éjection (6), à peu près la même largeur que la branche supérieure (13).

15. Épandeur centrifuge selon l'une des revendications 1 à 14, caractérisé en ce que la branche inférieure (12) de l'ailette d'éjection (8) est réalisée sous forme de bande étroite, qui, seulement dans la zone des moyens de fixation (27,28) assurant la fixation des ailettes d'éjection (8) sur le disque d'éjection (6), est élargie à une valeur qui crée l'appui nécessaire pour les moyens de fixation.

16. Épandeur centrifuge selon l'une des revendications 1 à 15, caractérisé en ce que l'ailette d'éjection (8) présente, dans sa zone traversant le jet de produit à épandre, une largeur d'à peu près 60 mm et, dans sa zone extérieure, une largeur d'à peu près 10 mm.

17. Épandeur centrifuge selon l'une des revendications 1 à 16, caractérisé en ce que chaque ailette d'éjection (8) arrive, par son extrémité intérieure, sur l'autre côté du disque d'éjection (6), en passant sur son centre.

18. Épandeur centrifuge selon l'une des revendications 1 à 17, caractérisé en ce que la branche supérieure (13) de chaque ailette d'éjection (8), dans sa section extérieure (20), qui est située - en observant depuis le centre du disque d'éjection (6) - de l'autre côté du puits d'évacuation (4), Disposée plus haut que l'arête inférieure du puits d'évacuation.

19. Épandeur centrifuge selon l'une des revendications 1 à 18, caractérisé en ce que l'âme (11) du profilé en U de chaque ailette d'éjection (8), dans sa section extérieure, avec son arête intérieure (21) se trouvant à la transition vers la branche (20) située plus haut, se situe sur un rayon du disque d'éjection (6) un peu supérieur à celui de la délimitation radialement la plus extérieure du puits d'évacuation (4).

20. Épandeur centrifuge selon l'une des revendications 1 à 19, caractérisé en ce que la branche (20) située plus haut est disposée dans la section extérieure de l'ailette d'éjection (8), parallèlement au fond (2) du réservoir de stockage (1).

21. Épandeur centrifuge selon l'une des revendications 1 à 20, caractérisé en ce que l'âme (11) et la branche supérieure (13) de chaque ailette d'éjection (8) appuient, à leur extrémité intérieure (16,17), sur un capuchon cylindrique (15) disposé au centre du disque d'éjection (6).

22. Épandeur centrifuge selon l'une des revendications 1 à 21, caractérisé en ce que la branche supérieure (13) appuie, sur l'extrémité intérieure, sur la totalité de la longueur de son arête, sur le capuchon (15).

23. Épandeur centrifuge selon l'une des revendications 1 à 22, caractérisé en ce que l'arête avant (14) de la branche supérieure (13) commence, en un endroit du capuchon (15) qui est à peu près opposé à l'endroit d'appui (16) de l'âme (11) sur le capuchon (15), dans le prolongement de l'âme, est tirée vers l'avant, en formant une première courbure (18) présentant un espacement croissant par rapport à l'axe (7) du disque d'éjection (6), et se transforme en une droite à peu près parallèle à l'âme (11), avec une courbure (19) inverse se raccordant à la première.

24. Épandeur centrifuge selon l'une des revendications 1 à 23, caractérisé en ce que la première courbure de l'arête avant est à peu près de forme spirale.

25. Épandeur centrifuge selon l'une des revendications 1 à 24, caractérisé en ce que le capuchon (15) dépasse vers le haut l'arête inférieure voisine du puits d'évacuation (4).

26. Épandeur centrifuge selon l'une des revendications 1 à 25, caractérisé en ce que le rayon du capuchon (15) est un peu inférieur au rayon de la limitation du puits d'évacuation (4) qui se trouve le plus à l'intérieur par rapport à l'axe (7) du disque d'éjection (6).

27. Épandeur centrifuge selon l'une des revendications 1 à 26, avec un arbre d'entraînement disposé au-dessous du disque d'éjection, sur le moyeu duquel le disque d'éjection est fixé, caractérisé en ce que le capuchon (15) sert à la fixation du disque d'éjection (6) sur le moyeu (24).

28. Épandeur centrifuge selon l'une des revendications 1 à 27, caractérisé en ce que l'ailette d'éjection (8) est chanfreinée vers le bas à son extrémité extérieure, en partant de la branche supérieure (13,20).

29. Épandeur centrifuge selon l'une des revendications 1 à 28, caractérisé en ce que le puits d'évacuation (4) présente une section transversale augmentant en allant vers le bas à partir de l'ouverture d'évacuation (3).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13